# EUROPEAN PATENT SPECIFICATION

(11) **EP 2 695 722 B1**
(45) Date of publication and mention of the grant of the patent: **05.07.2017**
(21) Application number: 12767314.3
(22) Date of filing: 23.02.2012
(51) Int. Cl.: B29C 65/02, B29C 65/48, B29C 70/34

(54) **COMPOSITE MOLDED BODY AND METHOD FOR PRODUCING SAME**
VERBUNDSTOFFFORMKÖRPER UND HERSTELLUNGSVERFAHREN DAFÜR
CORPS MOULÉ COMPOSITE ET PROCÉDÉ DE PRODUCTION DE CE CORPS

(30) Priority: 05.04.2011 JP 2011083597
(43) Date of publication of application: 12.02.2014
(73) Proprietor: Toray Industries, Inc., Tokyo, 103-8666 (JP)
(72) Inventor: ISHIBASHI Soichi, Tokyo 103-8666 (JP); KOSHI Masayuki, Nagoya-shi, Aichi 455-8502 (JP)
(74) Representative: Hoefer & Partner Patentanwälte mbB
(86) International application number: PCT/JP2012/054345
(87) International publication number: WO 2012/137554

(56) References cited:
- EP-A1- 1 762 368
- EP-A1- 1 892 079
- WO-A1-90/00970
- JP-A- 3 248 832
- JP-A- 9 164 595
- JP-A- 58 222 815
- JP-A- 60 239 224
- JP-A- 2007 313 778
- JP-A- 2008 230 224
- JP-B2- 3 906 319

## Description

### Technical Field of the Invention

The present invention relates to a method for producing a composite molded body, and specifically, to a method for producing a composite molded body which molds a composite molded body with pre-molding preforms with predetermined shapes which comprise fiber-reinforced resins using thermoplastic resins, melting a part of the preforms by heating, and joining the preforms to each other at the molten part, and a composite molded body produced by the method.

### Background Art of the Invention

A method for joining a fiber-reinforced resin of a thermosetting resin and a fiber-reinforced resin of a thermoplastic resin and producing a composite molded body made of a fiber-reinforced resin as a whole is known (for example, Patent documents 1 and 2). The thermoplastic resin itself and the fiber-reinforced resin using the thermoplastic resin are excellent in moldability and mass productivity as compared with the thermosetting resin and the fiber-reinforced resin using the same, because injection molding can be carried out relatively easily. Therefore, in particular in production of mass products and the like, a method for producing a composite molded body which can efficiently join fiber-reinforced resins using thermoplastic resins to each other is required.

As such a method for producing a composite molded body, for example, the following method is considered. Namely, a method is considered for preparing at least two kinds of fiber-reinforced resin products using thermoplastic resins which are formed by press molding or injection molding (for example, a fiber-reinforced resin product using a polyphenylene sulfide (PPS), this is called as a preform or a primary molded product.), press contacting the preforms to each other while heating them by some means such as direct heating, vibration or ultrasonic waves, melting a part of the preforms, and forming a composite molded body by the joint due to the welding. By such a so-called fusing bonding, it is possible to obtain, for example, a hollow structure or a composite molded body as a final molded product in which ribs and the like are equipped and which exhibits satisfactory strength and stiffness together.

However, in the above-described preforms using, for example, a usual PPS grade, because the crystallization speed of the PPS resin is relatively high, as a result, the solidification at the time of cooling from the molten condition is fast. As a result, even if the surface of the preform is molten by giving a certain amount of heat, because the solidification occurs quickly before proceeding with a step for achieving a good fusion such as press contacting, a joint strength capable of meeting an expectation cannot be obtained. Therefore, there is a fear that the strength and stiffness of a composite molded body as a final molded product do not reach target values.

### Prior art documents

### Patent documents

Patent document 1: JP-B-3906319
Patent document 2: JP-B-4543696

EP 1 892 079 A1 teaches a connecting structure for a first component (12) made from a fiber composite material and a second component (14) made from fiber-reinforced thermoplastic comprises a connecting zone (26) in which the components are fastened together, e.g. by riveting. A layer (40) of material which is reinforced with short fibers is positioned between the two components in the connecting zone. Further described is a method for binding two components as described by positioning a layer of material which is reinforced with short fibers in a connecting zone between them and fastening them together.

JP 2008 230224 A teaches a thermoplastic composite body capable of providing high adhesion and high sealing property even when a warp or deformation is generated on the bonded surface of a molding, in the method of obtaining the composite body by laser welding. Said thermoplastic composite body is formed by bonding moldings by laser welding through a thermoplastic elastomer on the bonding surface, in composite molding formed by welding together two moldings of which the one molding is made of a fiber-reinforced thermoplastic resin.

WO 90/00970 A1 teaches that joining of thermoplastic parts of indeterminate thickness to each other is effected by application of heat to selected surface areas thereof by intense focussed infrared heat lines produced by parabolic-elliptical-reflection heat sources displaced by a reciprocating linear actuator, removable by a robotic controller after completion of heating to enable intermediate pushing together of the parts by further actuators for bonding.

EP 1762368 A1 discloses a Laser ray transmitting colored resin composition comprising a polyphenylene sulfide resin and a colorant having an endothermic peak between 200 °C and 300 °C as determined by TG/DTA thermal analysis, wherein the difference T C -T N between the crystallization point T C of the laser ray transmitting colored resin composition and the crystallization point T N of the same composition as said composition except for not containing the aforementioned colorant, is not less than 0 °C as determined by DSC thermal analysis. Further discloses is a laser ray transmitting material made of the laser ray transmitting colored resin composition, and having one exothermic energy peak and one endothermic energy peak as determined by DSC thermal analysis. The laser ray transmitting colored resin composition is excellent in molding accuracy, good in molded product appearance and gloss, capable of preventing or effectively reducing the gap between the materials to be welded in the case of a molded product used for laser welding, and good in heat resistance and fastness, and the laser ray transmitting material is excellent in dimension stability and shape stability and capable of preventing or effectively reducing the gap between the materials to be welded when used for laser welding.

### Summary of the Invention

### Problems to be solved by the Invention

Accordingly, an object of the present invention is to provide a method in which, when producing a composite molded body of a fiber-reinforced resin using a thermoplastic resin and excellent in moldability and mass production, pre-molded preforms are joined by fusing bonding to each other at a sufficiently high joint strength, and a composite molded body as a final molded product excellent in strength
and stiffness can be produced efficiently.

### Means for solving the Problems

To achieve the above-described object, a method for producing a composite molded body according to the present invention is a method wherein a composite molded body is molded by joining a preform (a) pre-molded using a fiber-reinforced thermoplastic resin and a preform (b) pre-molded using a fiber-reinforced thermoplastic resin, and the method comprises the steps of:
(1) containing reinforcing fibers having a weight average fiber length of 1 mm or more in at least one of the preforms (a) and (b);
(2) using a thermoplastic resin (A) for the preform (a) and using the thermoplastic resin (A) or a thermoplastic resin (B) for the preform (b);
(3) forming a thin film of a thermoplastic resin (C) on a surface of either the preform (a) or (b), or on surfaces of both of the preforms (a) and (b); and
(4) melting the thermoplastic resin (C) and a part of the preforms (a) and (b) by heating at a condition where the thin film of the thermoplastic resin (C) is placed at a boundary surface of joint, and molding the composite molded body by joint due to the melting, wherein
said thermoplastic resin (A), thermoplastic resin (B) and thermoplastic resin (C) have a main component of a crystalline thermoplastic resin, and satisfy the following relationships:
crystallization temperature of thermoplastic resin (C) < crystallization temperature of thermoplastic resin (A), and
crystallization temperature of thermoplastic resin (C) < crystallization temperature of thermoplastic resin (B), and wherein
said thermoplastic resin (A) and thermoplastic resin (B) have a main component of a polyphenylene sulfide, and said thermoplastic resin (C) comprises a copolymerized polyphenylene sulfide.

As the above-described preform containing reinforcing fibers having a weight average fiber length of 1 mm or more, for example, either
(1) a molded body with a combination of a mat base material substantially randomly oriented with reinforcing fibers having a weight average fiber length in a range of 1 mm to 50 mm and a thermoplastic resin; or
(2) a molded body reinforced so that continuous fibers are arranged to be extended between arbitrary two end parts of the preform, or
a molded body combined therewith can be employed. Namely, in a molded product of a fiber-reinforced resin using a thermoplastic resin, in order to realize exhibition of high mechanical properties required for, for example, structural materials, because it becomes necessary that the fiber length of reinforcing fibers is great, a molded product is preferred to use reinforcing fibers having a weight average fiber length of 1 mm or more, in particular, in consideration of moldability, etc., it is preferred to use a reinforcing fiber base material of reinforcing fibers having a weight average fiber length in a range of 1 mm to 50 mm, and preferred is a molded body with a combination of a mat base material substantially randomly oriented with reinforcing fibers having a fiber length in this range and a thermoplastic resin. Alternatively, a molded body reinforced so that reinforcing fibers formed as continuous fibers are arranged to be extended between arbitrary two end parts (for example, between two end parts of two sides facing each other) of the preform is also preferred. Furthermore, a molded body combined with those can also be employed.

As described above, it is one of preferred embodiments of the present invention to use a molded body, which is reinforced so that continuous fibers are arranged to be extended between arbitrary two end parts, as the preform. In such an embodiment, highest mechanical properties can be obtained without cutting of fibers when certain reinforcing fibers are used. If the preform reinforced by the continuous fibers is disposed in such a manner as a skeletal structure, in a composite integrated molded product in the present invention, high mechanical properties and a complicated shape can be both realized.

In case where discontinuous reinforcing fibers are used as the reinforcing fibers of the preform, it is preferred that they are reinforcing fibers having a weight average fiber length of 1 mm to 50 mm as described above. If the weight average fiber length is less than 1 mm, the characteristics of the reinforcing fibers cannot be extracted and required high mechanical properties cannot be exhibited. If the weight average fiber length exceeds 50 mm, a good formability, that is one feature when discontinuous reinforcing fibers are employed, is damaged.

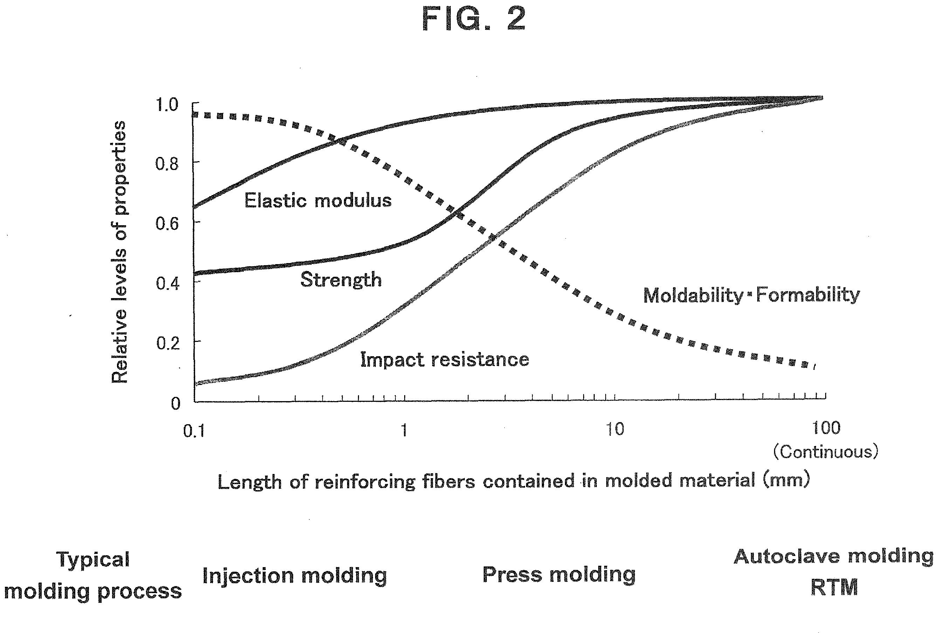

Further, in case where a mechanical property, in particular, such as impact resistance is attached importance to, in the above-described preform containing reinforcing fibers having a weight average fiber length of 1 mm or more, a range of 20 mm to 50 mm for the weight average fiber length of the reinforcing fibers can be indicated as a more preferable range. This is because the fiber length greatly influences contribution to increase of mechanical properties such as impact resistance as shown in Fig. 2.

The orientation and the other characteristics of the discontinuous fibers are not particularly restricted, and a substantially random orientation can be employed. As a range of this "substantially random", a sheet-like mat dispersed with fibers at an isotropic condition in plane or having a gentle constant orientation can be exemplified, and a mat prepared by a known fibrous mat production process such as paper making process, carding process or air laid process can be used.

Further, as one of preferred embodiments of the present invention, can also be raised an embodiment wherein at least a surface layer part of the above-described preform containing reinforcing fibers having a weight average fiber length of 1 mm or more contains a layer in which reinforcing fibers made of continuous fibers are oriented in one direction.

For the above-described thermoplastic resin (A), thermoplastic resin (B) and thermoplastic resin (C), thermoplastic resins prescribed differently from each other (namely, they are same kind of thermoplastic resins, but are thermoplastic resins prepared by prescriptions different from each other so that their properties and characteristics are different from each other) are used. Because of joint formation of thermoplastic resins to each other, essentially a good joint state can be easily obtained, and further, recycle can be easily carried out by crushing of the whole of a molded product. In the present invention, since preforms are molded in advance even though thermoplastic resins are joined to each other, it is aimed to give a high joint strength between the thermoplastic resin (C) forming a surface layer part of a preform and the thermoplastic resin (A) or the thermoplastic resin (B), and in particular, in order to achieve this, in the present invention, the following is employed, wherein the above-described thermoplastic resin (A), thermoplastic resin (B) and thermoplastic resin (C) have a main component of a crystalline thermoplastic resin, and satisfy the following relationships.
crystallization temperature of thermoplastic resin (C) < crystallization temperature of thermoplastic resin (A), and
crystallization temperature of thermoplastic resin (C) < crystallization temperature of thermoplastic resin (B)

Thus, by the present invention giving differences with high and low to the crystallization temperatures, in particular, it becomes possible to lower the crystallization speed by making the crystallization temperature of the thermoplastic resin (C) positioned at the boundary surface of the joint relatively low (the higher the crystallization temperature is, the higher the crystallization speed is), and when the boundary surface is heated by giving vibration and the like, the thermoplastic resin (C) at the boundary surface can be sufficiently molten before crystallization, and a time for becoming attached with the boundary surface can be obtained by press contact of the preforms to each other and the like. By this, in the combination of the preforms using the thermoplastic resin (A) or the thermoplastic resin (B) with each other, it becomes possible to produce a composite molded body joined with a high joint strength. Where, with the determination of this crystallization temperature (Tc), by determining a crystallization exothermic peak temperature [crystallization temperature (Tc)] of a target resin by cooling the target resin from a molten condition at a constant speed (10°C/min.) by a differential scanning calorimeter (DSC), the above-described crystallization speed is estimated (the higher the crystallization temperature (Tc) is, the higher the crystallization speed is).

Further, in order to satisfy the above-described properties of the crystallization temperatures, or separately from the above-described properties of the crystallization temperatures, in the invention thermoplastic resin (A) and thermoplastic resin (B) are a thermoplastic resin made of a homopolymer polymerized with a specified monomer, and the above-described thermoplastic resin (C) is a thermoplastic resin made of a copolymer which is copolymerized with two or more different-kind monomers and contains a same monomer as a monomer in the thermoplastic resin (A) or the thermoplastic resin (B) as one of the two or more monomers, or a resin composition blended with the copolymer. Thus, it becomes possible to make the crystallization temperature of the thermoplastic resin (C) side low as compared with that of the thermoplastic resin (A) or the thermoplastic resin (B) side, the thermoplastic resin (C) with the low crystallization temperature contacts with the thermoplastic resin (A) and the thermoplastic resin (B) at a molten condition for a longer period of time, and it becomes possible to aim a high-strength joint with the thermoplastic resin (A) or the thermoplastic resin (B) (between the preform (a) and the preform (b)). Namely, it becomes possible to produce a composite molded body joined with a high joint strength.

Where, it is possible to lower the crystallization speed of the whole system by lowering the crystallization temperatures of all resins of the thermoplastic resin (A), the thermoplastic resin (B) and the thermoplastic resin (C). However, if a special manner for lowering a crystallization temperature is employed relatively to the whole system, cost up cannot be avoided, and therefore, this method is not considered to be an advantageous method industrially. By using the thermoplastic resin (C) relatively low in crystallization temperature only at the boundary surface of the joint, a sufficient joint strength between both resins can be obtained and a great cost up can be avoided.

As the above-described boundary layer of the joint part (intermediate layer), for example, a film or a nonwoven fabric due to melt blow or spun bond, using the thermoplastic resin (C), can be used. This is disposed on either the preform (a) or the preform (b), or on the surfaces of both the preform (a) and the preform (b). For example, when a preform is obtained beforehand by pressing and the like, it is preferred to place it on the surface and integrate it in advance. In this case, even if the thermoplastic resin (C) and the thermoplastic resin (A) or the thermoplastic resin (B) are partially mixed, at least a part of the thermoplastic resin (C) may be exposed on the surface.

As a method for joining the preform (a) and the preform (b) in the method for producing a composite molded body according to the present invention, for example, the following methods can be used. Can be exemplified vibration welding (method wherein the resins are welded to each other by melting the resins by utilizing a friction heat generated at the joint boundary surface between two kinds of preforms), hot plate fusing bonding (technology wherein preforms to be welded are heated by contact or non-contact condition of a hot plate heated in advance, and after the joint surfaces become molten condition, two kinds of preforms are pressed to be welded), impulse fusing bonding (method of fusing bonding using a heat source in which a low voltage and a great current are applied to a heater wire for a short period of time to get an exothermic condition), high-frequency fusing bonding (method of fusing bonding for generating an internal heat in a material to be joined (conductive material) by utilizing a high-frequency induction heating), ultrasonic fusing bonding (method for elevating in temperature a preform locally and momentarily by a friction heat generated by giving a vertical ultrasonic vibration to the preform), etc. Other than those, known heating methods can be used such as a method for flowing an inductive current to a conductive material (for example, carbon fibers) by electromagnetic induction heating to heat it by Joule heat, a method for directly flowing a current to a conductive material (for example, carbon fibers) to heat it by Joule heat, and methods due to hot air, a torch or a laser.

In the method for producing a composite molded body according to the present invention, as more concrete combinations of the thermoplastic resin (A), the thermoplastic resin (B) and the thermoplastic resin (C), for example, the following combinations are used, wherein the thermoplastic resin (A) and the thermoplastic resin (B) have a main component of a polyphenylene sulfide, and the thermoplastic resin (C) comprises a copolymerized polyphenylene sulfide. In this case, as the copolymerized polyphenylene sulfide, a polymer copolymerized with m-phenylene sulfide unit to p-phenylene sulfide unit can be used.

Polyphenylene sulfide is a polymer having a stiff frame and has a high stiffness, and exhibits high mechanical properties by a combination with reinforcing fibers such as carbon fibers. Therefore, even if the weight average fiber length of the reinforcing fibers is shortish to be in a range of 1 mm to 20 mm, it exhibits relatively high mechanical properties. Further, in case where the fiber length is longer or continuous reinforcing fibers are used, it exhibits higher properties. Further, it has a flame retarding property, and suitable for use requiring a flame retardance such as various electronic equipment or electric parts for vehicles. Furthermore, although usual polyphenylene sulfide comprising mainly p-polyphenylene sulfide is high in crystallization speed and is a group usually difficult with composite integration molding, by applying the present invention, for example, by using a resin group lowering the crystallization temperature (lowering the crystallization speed) for the thermoplastic resin (C), a composite molded body high in joint strength can be obtained.

Further, as another combination not falling under the scope of the present invention, the thermoplastic resin (A) and the thermoplastic resin (B) comprise a polyamide, and the thermoplastic resin (C) comprises a copolymerized polyamide.

The crystallization temperature of the thermoplastic resin (C) side is desired to be low as compared with that of the thermoplastic resin (A) side or the thermoplastic resin (B) side, and the method for realizing this is not restricted. As the method for changing the crystallization temperature of a polymer, known methods can be utilized, and other than the above-described method using a copolymer, the crystallization temperature can be controlled by adding various additives such as talc, kaolin, an organic phosphorus compound, a specified polymer at a small amount. Further, it is also possible to change the crystallization temperature by setting the end groups of the main polymer chains of the thermoplastic resin (A), the thermoplastic resin (B) and the thermoplastic resin (C) to specified groups.

Further, in the method for producing a composite molded body according to the present invention, the kind of the reinforcing fibers used is not particularly restricted, carbon fibers, glass fibers, aramide fibers, etc. can be used, and a hybrid structure combining those can also be employed. In case of aiming easiness of design of strength, easiness of production and the like in the production of the composite molded body, in particular, an embodiment containing carbon fibers is preferred. In particular, if carbon fibers are used as the reinforcing fibers of the preform using continuous fibers, high characteristics of the reinforcing fibers can be exhibited most strongly.

By use of the inventive method, a composite molded body is provided. The shape and structure of the composite molded body to be produced are not particularly restricted. With the fused part between the preform (a) and the preform (b), it is desirable to ensure a broad area as long as the shape allows. A fitting shape can be employed. As at least one of the preforms, exemplified is a preform obtained by injecting a pellet-like material using a usual injection molding machine. Moreover, a molding method performing an operation resembling thereto can also be used. For example, so-called injection press molding combining operations of injection and pressing can be used. Pellets used for injection molding or technologies resembling thereto may be usual compound pellets and may be so-called long-fiber pellets.

### Effect according to the Invention

Thus, in the method for producing a composite molded body according to the present invention, when the preform (a) and the preform (b) are joined, since the thermoplastic resin (C) forming the surface layer parts of the preforms and the thermoplastic resins (A) and (B) are set to be same kind of thermoplastic resins but are thermoplastic resins prepared by prescriptions different from each other so that the crystallization speed of the thermoplastic resin (C) is set to be relatively low, the thermoplastic resin (C) contacts with the thermoplastic resin (A) and the thermoplastic resin (B) at a molten condition for a longer period of time, and a high-strength joint with the resin (A) or the resin (B) (between the preform (a) and the preform (b))can be achieved. The composite molded body thus produced has high mechanical strength and stiffness, and further, because it is a body joined with same kind of thermoplastic resins, it can also have an excellent recycling property.

### Brief explanation of the drawings

[Fig. 1] Fig. 1 is a schematic diagram showing a method for producing a composite molded body according to an embodiment of the present invention.
[Fig. 2] Fig. 2 is a diagram showing general relationships between a fiber length of reinforcing fibers and properties and moldability of composite in connection with the present invention.

### Embodiments for carrying out the Invention

Hereinafter, embodiments of the present invention will be explained referring to figures.

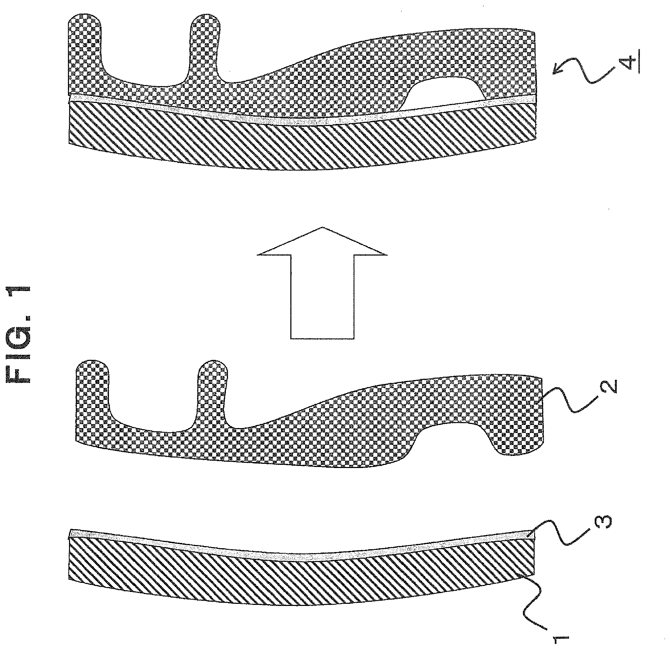

Fig. 1 shows examples of a method for producing a composite molded body according to an embodiment of the present invention and preforms in the present invention. In Fig. 1, symbol 1 indicates a preform (a) and symbol 2 indicates a preform (b). Further, symbol 3 indicates a layer using a thermoplastic resin (C) having a relatively lower crystallization temperature (for example, a low crystallization-temperature PPS [a low crystallization-temperature copolymerized polyphenylene sulfide]). The layer 3 of thermoplastic resin (C) is integrally molded in advance on one surface of preform (a) (1). Each of preform (a) (1) and preform (b) (2) comprises a fiber-reinforced resin using a thermoplastic resin (A) or a thermoplastic resin (B) (i.e., PPS having a usual crystallization temperature) which has a crystallization temperature relatively higher than that of thermoplastic resin (C).

The above-described preform (a) (1) and preform (b) (2) are formed into a composite molded body 4 by melting a part of the preforms to join them by the melting by press contacting the preforms to each other while heating them by an appropriate means such as direct heating, vibration or ultrasonic means. By such a so-called fusion, for example, composite molded body 4 as a final molded product, which is formed in a hollow structure or which is disposed with ribs and the like and has both of strength and stiffness, can be obtained.

A case is also considered where the resin used for preform (b) (2) is the thermoplastic resin (B) different from the thermoplastic resin (A). Further, both cases where the layer 3 of thermoplastic resin (C) is formed in advance on the surface of preform (a) (1) and where it is formed on the surface of preform (b) (2) can be employed as long as it is an embodiment wherein the thermoplastic resin (C) exists on the fusion surface. The layer 3 of thermoplastic resin (C) may be formed on the surfaces of both preform (a) (1) and preform (b) (2).

The above-described preform (a) and preform (b) are obtained by a molding method such as press molding or injection molding, and the molding method is not particularly restricted. In case using press molding, a preform having a predetermined shape may be molded by using a so-called thermoplastic prepreg, prepared by compounding or impregnating a thermoplastic resin into, for example, a continuous fiber base material such as a woven fabric, a base material arranged with fibers in one direction (a unidirectional base material [UD]) or a long-fiber mat, as a raw material, placing it in a mold and heating and pressing it. At that time, for example, by pressing after disposing a layer such as a film or a nonwoven fabric, which becomes the thermoplastic resin (C), as the lowermost layer or the uppermost layer in a mold in advance, they can be integrated. Further, also in case of injection molding, molding can be carried out by a method such as insert molding for injection molding after disposing a layer such as a film or a nonwoven fabric, which becomes the thermoplastic resin (C), in a cavity of a mold in advance, or after disposing a thermoplastic prepreg in a cavity in advance. Other than these, known thermoplastic resin molding technologies such as so-called injection press molding, vacuum molding, blow molding, autoclave molding and diaphragm molding can be utilized for preparing a preform. The preform is processed into a composite molded body usually by being cooled for the purpose of being taken out from a mold after primary molding, and thereafter, being heated again and joined to make the composite molded body. A total production line and the like can also be exemplified wherein, while the preform (a) and the preform (b) are being molded by molding machines separate from each other, respectively, they are automatically joined at a following process. Of course, if the molding cycles of the preform (a) and the preform (b) are different from each other, an independent joining/processing line may be constructed.

Freedom of shape and design of a composite molded body can be drastically increased by a condition where the preforms can be freely joined and compounded to each other at a good joint strength. For example, a hollow structure and the like, which is difficult to obtain by a usual injection molding, can be easily realized. Further, a complicated shape and a high mechanical property can be both realized, for example, by molding a face plate part having a gentle curved surface by using a continuous fiber-reinforced prepreg (preform (a)) and thereto joining a complicated shape injection molded product having ribs and the like for reinforcement (preform (b)). In this case, if joined so as to adequately form a hollow part, further a property for lightening in weight can also be improved greatly. The preforms (a) and (b) and the raw materials to be used and shapes therefor can be freely set within the range of the application of the raw materials capable of being applied. If the preform (a) is formed into a face plate shape (for example, a skin panel) by reinforcing with long fibers having a weight average fiber length of 20 mm or more or continuous fibers and using a high elastic modulus/high thermal resistance resin such as PPS resin as a base of the matrix resin, the preform (b) is formed as a shape such as L channel, C channel, I channel or Ω channel (for example, a stringer), and these preforms are joined to each other to form an integral skin panel structure, it becomes possible to apply it even to a structure requiring high mechanical properties and property of lightening in weight such as a structural material for airplanes. Similarly, use for a structure for vehicles, in which a reinforcement member (for example, an inner frame) is joined to a face plate member (for example, an outer panel), can also be easily realized. Where, in these cases, even if an embodiment is employed wherein a plurality of preforms (b) as reinforcement members are joined to a preform (a) having a wide face plate shape, it is included in the present invention.

In order to investigate an influence degree to a joint strength depending upon the combination of fiber-reinforced resins, a vibration fusion test was carried out at the combination of preforms as shown in Fig. 1. Using a polyphenylene sulfide having a usual crystallization temperature to preform (a) and preform (b) as the thermoplastic resins (A) and (B), a layer of thermoplastic resin (C) was integrally formed on one surface of the preform (a). As the thermoplastic resin (C), a polyphenylene sulfide resin having a low crystallization temperature was used. In this case, the joint strength was high, and the dispersion of the joint strength was small. In order to compare with this, when a fusion test was carried out preparing completely same preform (a) and preform (b) other than a condition where the thermoplastic resin (C) was not contained, the joint strength was low, and the dispersion of the joint strength was great.

In the above description, the combination of the thermoplastic resin (A), the thermoplastic resin (B) and the thermoplastic resin (C) whose bases are PPS is exemplified. For example, as aforementioned, as this combination, can be exemplified a combination in which the thermoplastic resin (A) and the thermoplastic resin (B) comprise a polyphenylene sulfide and the thermoplastic resin (C) comprises a copolymerized polyphenylene sulfide, and as the copolymerized polyphenylene sulfide, for example, a polymer in which m-phenylene sulfide unit is copolymerized to p-phenylene sulfide unit can be used. Further described but not part of the present invention is a combination of the thermoplastic resin (A), the thermoplastic resin (B) and the thermoplastic resin (C), wherein the thermoplastic resin (A) and the thermoplastic resin (B) comprise a polyamide, and the thermoplastic resin (C) comprises a copolymerized polyamide. In such a case using a copolymerized polyamide, as examples of polyamide forming components capable of being copolymerized, can be exemplified amino acids such as 6-aminocapronic acid (excluding a case of a-1), 11-aminoundecanoic acid, 12-aminododecanoic acid and paraaminomethyl benzoic acid, lactams such as ε-aminocaprolactam (excluding a case of a-1) and ω-laurolactam, aliphatic, alicyclic and aromatic diamines such as tetramethylene diamine, hexamethylene diamine, 2-methylpentamethylene diamine, undecamethylene diamine, dodecamethylene diamine, 2,2,4-/2,4,4-trimethylhexamethylene diamine, 5-methylnonamethylene diamine, metaxylene diamine, paraxylylene diamine, 1,3-bis(aminomethyl)cyclohexane, 1,4-bis(aminomethyl)cyclohexane, 1-amino-3-aminomethyl-3,5,5-trimethylcyclohexane, bis(4-aminocyclohexyl)methane, bis(3-methyl-4-aminocyclohexyl)methane, 2,2-bis(4-aminocyclohexyl)propane, bis(aminopropyl)piperazine, and aminoethylpiperazine, and aliphatic, alicyclic and aromatic dicarboxylic acids such as adipic acid, suberic acid, azelaic acid, sebacic acid, decane dicarboxylic acid, terephthalic acid, isophthalic acid, 2-chloroterephthalic acid 2-methylterephthalic acid, 5-methylisophthalic acid, 5-sodium sulfoisophthalic acid, hexahydroterephthalic acid, and hexahydroisophthalic acid. Further, in accordance with properties required for a molded product to be obtained, a flame retardant, a weather resistance improvement agent, and other than those, an antioxidant, a thermal stabilizer, an ultrasonic absorbent, a plasticizer, a lubricant, a colorant, a compatibilizer, a conductive filler, etc. can be added into a resin.

Further, in the present invention, the preform is molded in advance using a first fiber-reinforced resin containing reinforcing fibers having a weight average fiber length of 1 mm or more, preferably it is, for example, either
(1) a molded body with a combination of a mat base material substantially randomly oriented with reinforcing fibers having a weight average fiber length in a range of 1 mm to 50 mm and a resin; or
(2) a molded body reinforced so that continuous fibers are arranged to be extended between arbitrary two end parts of the preform, or
a molded body combined therewith, and this is defined in order to satisfy good properties with respect to both of the various mechanical properties and the moldability/formability of the preform itself, ultimately, of a composite molded body a final molded product.

Namely, as shown in Fig. 2 with respect to a general relationship between length (weight average fiber length, unit: mm) of reinforcing fibers contained in a material for molding in a fiber-reinforced resin (composite) and relative levels of various kinds of properties of a molded fiber-reinforced resin, if the fiber length becomes small, the elastic modulus, the strength and the impact resistance are decreased but the moldability and the formability become better, and on the contrary, if the fiber length becomes large, the elastic modulus, the strength and the impact resistance are increased but the moldability and the formability deteriorate. In order to maintain these properties to be high at a good balance, in particular, it is preferred that reinforcing fibers having a weight average fiber length in a range of 1 mm to 50 mm are contained.

Although in Fig. 2 typical molding processes corresponding to the length of reinforcing fibers contained in a molded material are exemplified (injection molding, press molding, autoclave molding, RTM [Resin Transfer Molding]) (of course, not limited to these molding processes), in case where reinforcing fibers having a weight average fiber length in a range of 1 mm to 50 mm are contained that is a preferred embodiment in the present invention, press molding is suitable.

### Industrial Applications of the Invention

The method for producing a composite molded body according to the present invention can be applied to any use of a composite molded body, and in particular, is suitable for case where a composite molded body required to be produced at a relatively mass production system is produced efficiently at an excellent productivity. As the uses of a composite molded body prepared according to the present invention, for example, exemplified are housings, inner members such as tray and chassis and casings thereof of electric/electronic equipment such as personal computer, display, office automation equipment, portable telephone, portable information terminal, facsimile, compact disc, portable micro disc, portable radio cassette, PDA (portable information terminal such as electronic pocketbook), video camera, digital still camera, optical equipment, audio equipment, air conditioner, illumination equipment, amusement goods, playthings, and other electric household appliances; members for mechanisms; building material such as panel; parts, members and outer panels for automobiles and two-wheeled vehicles such as motor parts, alternator terminal, alternator connector, IC regulator, potentiometer base for light dimmer, parts for suspension, various kinds of valves such as exhaust gas valve, various kinds of pipes for fuel, exhaust and intake systems, air intake nozzle snorkel, intake manifold, various kinds of frames, various kinds of hinges, various kinds of bearings, fuel pump, gasoline tank, CNG tank, engine cooling water joint, carburetor main body, carburetor spacer, exhaust gas sensor, cooling water sensor, oil temperature sensor, brake friction pad wear sensor, throttle position sensor, crank shaft, position sensor, air flow meter, thermostat base for air conditioner, heater hot air flow control valve, brush holder for radiator motor, water pump impeller, turbine vane, parts for wiper motor, distributor, starter switch, starter relay, wire harness for transmission, window washer nozzle, air conditioner panel switch board, fuel system electromagnetic valve coil, connector for fuse, battery tray, AT bracket, head lamp support, pedal housing, handle, door beam, protector, chassis, frame, arm rest, horn terminal, step motor rotor, lamp socket, lamp reflector, lamp housing, brake piston, noise shield, radiator support, spare tire cover, sheet shell, solenoid bobbin, engine oil filter, ignition device case, under cover, scuff plate, pillar trim, propeller shaft, wheel, fender, facer, bumper, bumper beam, bonnet, aero parts, platform, cowl louver, roof, instrument panel, spoiler, and various kinds of modules; and parts, members and outer panels for airplanes such as landing gear pod, winglet, spoiler, edge, rudder, elevator, fairing, and rib.

### Explanation of symbols

- 1:: preform (a)
- 2:: preform (b)
- 3:: layer of thermoplastic resin ©
- 4:: composite molded body

## Claims

1. A method for producing a composite molded body (4) wherein a composite molded body (4) is molded by joining a preform (a) (1) pre-molded using a fiber-reinforced thermoplastic resin and a preform (b) (2) pre-molded using a fiber-reinforced thermoplastic resin, said method comprising the steps of:
(1) containing reinforcing fibers having a weight average fiber length of 1 mm or more in at least one of said preforms (a) and (b) (1, 2);
(2) using a thermoplastic resin (A) for said preform (a) (1) and using said thermoplastic resin (A) or a thermoplastic resin (B) for said preform (b) (2);
(3) forming a thin film of a thermoplastic resin (C) (3) on a surface of either said preform (a) or (b) (1, 2), or on surfaces of both of said preforms (a) and (b) (1, 2); and
(4) melting said thermoplastic resin (C) and a part of said preforms (a) and (b) (1, 2) by heating at a condition where said thin film of said thermoplastic resin (C) (3) is placed at a boundary surface of joint, and molding said composite molded body (4) by joint due to said melting, wherein
said thermoplastic resin (A), thermoplastic resin (B) and thermoplastic resin (C) have a main component of a crystalline thermoplastic resin, and satisfy the following relationships:
crystallization temperature of thermoplastic resin (C) < crystallization temperature of thermoplastic resin (A), and
crystallization temperature of thermoplastic resin (C) < crystallization temperature of thermoplastic resin (B), and wherein
said thermoplastic resin (A) and thermoplastic resin (B) have a main component of a polyphenylene sulfide, and said thermoplastic resin (C) comprises a copolymerized polyphenylene sulfide.

2. The method for producing a composite molded body (4) according to claim 1, wherein said preform (1,2) containing reinforcing fibers having a weight average fiber length of 1 mm or more is either
(1) a molded body with a combination of a mat base material substantially randomly oriented with reinforcing fibers having a weight average fiber length in a range of 1 mm to 50 mm and a thermoplastic resin; or
(2) a molded body reinforced so that continuous fibers are arranged to be extended between arbitrary two end parts of said preform, or
a molded body combined therewith.

3. The method for producing a composite molded body (4) according to claim 2, wherein said preform (1, 2) containing reinforcing fibers having a weight average fiber length of 1 mm or more is a molded body with a combination of a mat base material substantially randomly oriented with reinforcing fibers having a weight average fiber length in a range of 20 mm to 50 mm and a thermoplastic resin.

4. The method for producing a composite molded body (4) according to claim 1, wherein at least a surface layer part of said preform (1, 2) containing reinforcing fibers having a weight average fiber length of 1 mm or more contains a layer in which reinforcing fibers made of continuous fibers are oriented in one direction.

5. The method for producing a composite molded body (4) according to any of claims 1 to 4, wherein said copolymerized polyphenylene sulfide comprises a polymer copolymerized with m-phenylene sulfide unit to p-phenylene sulfide unit.

6. The method for producing a composite molded body (4) according to any of claims 1 to 5, wherein at least one of said preforms (a) and (b) (1, 2) contains carbon fibers as reinforcing fibers.

## Patentansprüche

1. Verfahren zum Herstellen eines Verbundstoffformkörpers (4), wobei ein Verbundstoffformkörper (4) durch Verbinden einer Vorform (a) (1), die unter Verwendung eines faserverstärkten thermoplastischen Harzes vorgeformt wird, und einer Vorform (b) (2) geformt wird, die unter Verwendung eines faserverstärkten thermoplastischen Harzes vorgeformt wird, wobei das Verfahren folgende Schritte umfasst:
(1) Aufnehmen von Verstärkungsfasern mit einer gewichtsmittleren Faserlänge von 1 mm oder darüber in zumindest eine der Vorformen (a) und (b) (1, 2);
(2) Verwenden eines thermoplastischen Harzes (A) für die Vorform (a) (1) und Verwenden des thermoplastischen Harzes (A) oder eines thermoplastischen Harzes (B) für die Vorform (b) (2);
(3) Formen einer dünnen Schicht eines thermoplastischen Harzes (C) (3) auf einer Oberfläche entweder der Vorform (a) oder (b) (1, 2) oder auf Oberflächen beider Vorformen (a) und (b) (1, 2); und
(4) Schmelzen des thermoplastischen Harzes (C) und einen Teil der Vorformen (a) und (b) (1, 2) durch Erhitzen in einem Zustand, bei dem die dünne Schicht des thermoplastischen Harzes (C) (3) an einer Grenzfläche einer Verbindung angeordnet ist, und Formen des Verbundstoffformkörpers (4) durch Zusammenfügen aufgrund des Schmelzens, wobei
das thermoplastische Harz (A), das thermoplastische Harz (B) und das thermoplastische Harz (C) einen Hauptbestandteil eines kristallinen thermoplastischen Harzes aufweisen und die nachfolgenden Beziehungen erfüllen:
Kristallisationstemperatur des thermoplastischen Harzes (C) < Kristallisationstemperatur des thermoplastischen Harzes (A) und
Kristallisationstemperatur des thermoplastischen Harzes (C) < Kristallisationstemperatur des thermoplastischen Harzes (B), und wobei
das thermoplastische Harz (A) und das thermoplastische Harz (B) einen Hauptbestandteil eines Polyphenylensulfids aufweisen, und das thermoplastische Harz (C) ein copolymerisiertes Polyphenylensulfid umfasst.

2. Verfahren zum Herstellen eines Verbundstoffformkörpers (4) nach Anspruch 1, wobei die Vorform (1, 2), die Verstärkungsfasern mit einer gewichtsmittleren Faserlänge von 1 mm oder darüber enthält, entweder
(1) ein Formkörper mit einer Kombination aus einem Mattenbasismaterial mit im Wesentlichen willkürlich ausgerichteten Verstärkungsfasern, die eine gewichtsmittlere Faserlänge in einem Bereich von 1 mm bis 50 mm aufweisen, und einem thermoplastischen Harz ist; oder
(2) ein Formkörper ist, der so verstärkt ist, dass Endlosfasern zwischen sich zwei beliebigen Endbereichen der Vorform erstreckend angeordnet sind, oder
ein damit verbundener Formkörper ist.

3. Verfahren zum Herstellen eines Verbundstoffformkörpers (4) nach Anspruch 2, wobei die Vorform (1, 2), die Verstärkungsfasern mit einer gewichtsmittleren Faserlänge von 1 mm oder darüber enthält, ein Formkörper mit einer Kombination aus einem Mattenbasismaterial mit im Wesentlichen willkürlich ausgerichteten Verstärkungsfasern, die eine gewichtsmittlere Faserlänge in einem Bereich von 20 mm bis 50 mm aufweisen, und einem thermoplastisches Harz ist.

4. Verfahren zum Herstellen eines Verbundstoffformkörpers (4) nach Anspruch 1, wobei zumindest ein Oberflächenlagenbereich der Vorform (1, 2), der Verstärkungsfasern mit einer gewichtsmittleren Faserlänge von 1 mm oder darüber enthält, eine Schicht enthält, in der aus Endlosfasern hergestellte Verstärkungsfasern in einer Richtung ausgerichtet sind.

5. Verfahren zum Herstellen eines Verbundstoffformkörpers (4) nach einem der Ansprüche 1 bis 4, wobei das copolymerisierte Polyphenylensulfid ein Polymer aufweist, das mit einer m-Phenylensulfideinheit zu einer p-Phenylensulfideinheit copolymerisiert ist.

6. Verfahren zum Herstellen eines Verbundstoffformkörpers (4) nach einem der Ansprüche 1 bis 4, wobei zumindest eine der Vorformen (a) und (b) (1, 2) Kohlenstofffasern als Verstärkungsfasern enthält.

## Revendications

1. Procédé de fabrication d'un corps moulé composite (4) dans lequel un corps moulé composite (4) est moulé par assemblage d'une préforme (a) (1) pré-moulée en utilisant une résine thermoplastique renforcée par des fibres et d'une préforme (b) (2) pré-moulée en utilisant une résine thermoplastique renforcée par des fibres, ledit procédé comprenant les étapes consistant :
(1) à contenir des fibres de renforcement ayant une longueur moyenne pondérée de fibre supérieure ou égale à 1 mm dans au moins l'une desdites préformes (a) et (b) (1, 2) ;
(2) à utiliser une résine thermoplastique (A) pour ladite préforme (a) (1) et à utiliser ladite résine thermoplastique (A) ou une résine thermoplastique (B) pour ladite préforme (b) (2) ;
(3) à former un film mince d'une résine thermoplastique (C) (3) sur une surface de ladite préforme (a) ou (b) (1, 2), ou sur des surfaces de chacune desdites préformes (a) et (b) (1,2); et
(4) à fondre ladite résine thermoplastique (C) et une partie desdites préformes (a) et (b) (1, 2) par chauffage à un état où ledit film mince de ladite résine thermoplastique (C) (3) est placé à une surface limite d'assemblage, et à mouler ledit corps moulé composite (4) par assemblage en raison de ladite fusion, dans lequel
lesdites résine thermoplastique (A), résine thermoplastique (B) et résine thermoplastique (C) ont un composant principal d'une résine thermoplastique cristalline, et satisfont les relations suivantes :
la température de cristallisation de la résine thermoplastique (C) < la température de cristallisation de la résine thermoplastique (A), et
la température de cristallisation de la résine thermoplastique (C) < la température de cristallisation de la résine thermoplastique (B), et dans lequel
lesdites résine thermoplastique (A) et résine thermoplastique (B) ont un composant principal d'un sulfure de polyphénylène, et ladite résine thermoplastique (C) comprend un sulfure de polyphénylène copolymérisé.

2. Procédé de production d'un corps moulé composite (4) selon la revendication 1, dans lequel ladite préforme (1, 2), contenant des fibres de renforcement ayant une longueur moyenne pondérée de fibre supérieure ou égale à 1 mm, est soit
(1) un corps moulé avec une combinaison d'un matériau de base en mat orienté sensiblement de manière aléatoire avec des fibres de renforcement ayant une longueur moyenne pondérée de fibre comprise dans une plage allant de 1 mm à 50 mm et d'une résine thermoplastique ; ou
(2) un corps moulé renforcé de sorte que des fibres continues soient agencées pour être étendues entre deux parties d'extrémité arbitraires de ladite préforme, ou
un corps moulé combiné avec ceux-ci.

3. Procédé de production d'un corps moulé composite (4) selon la revendication 2, dans lequel ladite préforme (1, 2) contenant des fibres de renforcement ayant une longueur moyenne pondérée de fibre supérieure ou égale à 1 mm est un corps moulé avec une combinaison d'un matériau de base en mat orienté sensiblement de manière aléatoire avec des fibres de renforcement ayant une longueur moyenne pondérée de fibre comprise dans une plage allant de 20 mm à 50 mm et d'une résine thermoplastique.

4. Procédé de production d'un corps moulé composite (4) selon la revendication 1,
dans lequel au moins une partie de couche de surface de ladite préforme (1, 2) contenant des fibres de renforcement ayant une longueur moyenne pondérée de fibre supérieure ou égale à 1 mm contient une couche dans laquelle des fibres de renforcement réalisées en fibres continues sont orientées dans une direction.

5. Procédé de production d'un corps moulé composite (4) selon l'une des revendications 1 à 4, dans lequel ledit sulfure de polyphénylène copolymérisé comprend un polymère copolymérisé avec une unité de sulfure de m-phénylène en une unité de sulfure de p-phénylène.

6. Procédé de fabrication d'un corps moulé composite (4) selon l'une des revendications 1 à 5, dans lequel au moins l'une desdites préformes (a) et (b) (1, 2) contient des fibres de carbone en tant que fibres de renforcement.
